# FASCICULE DE BREVET EUROPEEN

(11) **EP 0 683 455 B1**
(45) Date de publication et mention de la délivrance du brevet: **13.08.1997**
(21) Numéro de dépôt: 95470021.7
(22) Date de dépôt: 12.05.1995
(51) Int. Cl.: G06F 11/00

(54) **Circuit intégré comprenant des moyens pour arrêter l'exécution d'un programme d'instructions quand une combinaison de points d'arrêt est vérifiée**
Mikrocomputer mit integrierter Haltepunktanordnung zur Erkennung von zusammengesetzten Ereignissen
Microcomputer with integrated breakpoint circuit triggered by combined events

(30) Priorité: 20.05.1994 FR 9406490
(43) Date de publication de la demande: 22.11.1995
(73) Titulaire: SGS-THOMSON MICROELECTRONICS S.A., 94250 Gentilly (FR)
(72) Inventeur: Klingler, Stéphan, F-57000 Metz (FR)
(74) Mandataire: Schmit, Christian Norbert Marie

(56) Documents cités:
- EP-A- 0 189 848
- EP-A- 0 445 042
- EP-A- 0 455 946
- EDN ELECTRICAL DESIGN NEWS, vol.34, no.8, Avril 1989, NEWTON, MASSACHUSETTS US pages 193 - 200 KEN MARTI 'Use a logic analyzer to debug real-time software'

## Description

L'invention concerne un circuit intégré comprenant des moyens pour arrêter l'exécution d'un programme d'instructions quand une combinaison de points d'arrêt est vérifiée.

On sait que de nombreux circuits intégrés, tels que les circuits intégrés spécialisés, ou ASIC (de l'anglais "Application Specific Integrated Circuit"), comprennent une unité centrale, ou processeur, et au moins une mémoire de programme, du type mémoire morte (ROM), reliée à l'unité centrale par un bus d'adresses, un bus de données et des lignes fournissant des signaux de commande d'accès en lecture et en écriture à cette mémoire, et contenant un programme d'instructions exécutées par cette unité centrale.

Quand un tel circuit intégré a été réalisé sur une puce de silicium, différents tests doivent lui être appliqués pour vérifier son fonctionnement. On teste ainsi d'une part, la constitution du circuit (caractéristiques des composants, connexions...) et d'autre part, le programme contenu dans la mémoire de programme, ou la manière avec laquelle le circuit l'exécute.

Pour le test du programme, il est connu de définir des conditions d'arrêt de l'exécution des instructions du programme, de telle manière que si ces conditions sont vérifiées, l'exécution des instructions est arrêtée. Ces conditions forment ce qu'on appelle des points d'arrêt (ou breakpoint en littérature anglo-saxonne). A cet effet, le circuit intégré comporte des moyens de stockage et de comparaison pour mémoriser par exemple une valeur d'adresse de la mémoire de programme définie par l'utilisateur, comparer cette valeur à la valeur présente sur le bus d'adresses d'instructions, et arrêter l'exécution des instructions quand ces valeurs sont égales.

Ce type de test par point d'arrêt permet de vérifier par exemple quelles valeurs sont positionnées sur des bus d'accès à l'unité centrale suite à l'exécution d'une instruction particulière. Une fois la vérification des valeurs effectuée, l'exécution des instructions peut reprendre, après avoir éventuellement modifié les conditions d'arrêt pour arrêter l'exécution ultérieurement (les instructions étant placées séquentiellement dans la mémoire de programme).

Ce type de test, conçu à l'origine pour tester le déroulement du programme dans un circuit intégré comprenant une seule mémoire, présente des inconvénients quand le circuit comprend par exemple, en plus de la mémoire de programme, des mémoires de données reliées également à l'unité centrale par des bus d'adresses, des bus de données, et des lignes fournissant des signaux de commande d'accès en lecture ou en écriture à ces mémoires. En effet, si le circuit comprend uniquement une mémoire de programme, on connaît a priori le contenu des adresses de cette mémoire. Par contre, si le circuit comprend une mémoire de données, dans laquelle on va par exemple réserver des espaces mémoires pour stocker des données à valeur variable, on ne pourra pas arrêter le programme en posant comme condition qu'une donnée à valeur variable, mémorisée à une adresse donnée, ait une certaine valeur. Soit le point d'arrêt portera sur le bus d'adresses de la mémoire de données, auquel cas on arrêtera le programme à chaque accès à la dite adresse de la mémoire, quelle que soit la valeur de la donnée mémorisée à cette adresse, soit le point d'arrêt portera sur le bus de données, auquel cas on arrêtera le programme quelle que soit l'adresse de la mémoire à laquelle on souhaite stocker la valeur donnée.

En pratique, il se peut ainsi que l'exécution des instructions soit arrêtée une multitude de fois sans que l'évènement attendu ne se produise, ce qui augmente le temps de test du programme inutilement. Il en serait de même si on souhaitait par exemple arrêter l'exécution des instructions quand l'exécution d'une instruction comprise dans une boucle de programme provoque un accès à une certaine adresse de la mémoire de donnée.

Le document EP-A-0 455 946 concerne un dispositif de test de points d'arrêt dans une mémoire partagée entre plusieurs processeurs. Les points d'arrêt portent sur une combinaison de conditions, portant uniquement sur l'écriture à une adresse donnée de la mémoire d'une donnée particulière. Le problème est de savoir quel processeur est à l'origine d'un point d'arrêt.

Dans ce document, on ne considère que le cas où les conditions sont vérifiées simultanément. Le problème de l'arrêt pour des conditions vérifiées avec un certain décalage temporel n'est pas résolu, le document écartant expressément (colonne 5, lignes 8 - 15) la recherche de la solution au problème. En effet dans les lignes précitées, il est dit que les cycles de lecture en mémoire sont ignorés par le bus de contrôle pour la détection d'événements mais qu'ils sont enregistrés dans une mémoire (pour être traités ultérieurement). La limitation de la détection est due au fait qu'il n'y a pas une simultanéité de cause à effet contrairement à une écriture en mémoire.

Au vu de ce qui précède, l'invention a pour but de proposer un circuit intégré optimisant le test d'un programme d'instructions, dans le cas où ce circuit comprend au moins deux mémoires, ce circuit comprenant des moyens de combinaison de points d'arrêt entre eux.

L'invention propose ainsi un circuit intégré comprenant :
- une unité centrale (2),
- une mémoire de programme (3) contenant un programme d'instructions, reliée à l'unité centrale par un bus d'adresses (4), un bus de données (5), et des lignes (6) fournissant des signaux de commande d'accès en lecture et en écriture à cette mémoire, les instructions étant exécutées par l'unité centrale,
- et au moins une mémoire de données (7) reliées à l'unité centrale par un bus d'adresses (8), un bus de données (9), et des lignes (10) fournissant des signaux de commande d'accès en lecture et en écriture à cette mémoire,
caractérisé en ce que le circuit comporte:
- des moyens d'arrêt (16) définissant une combinaison de conditions relatives aux valeurs présentes sur deux des bus de mémoire et aux valeurs de signaux de commande d'accès à au moins une de ces mémoires, et arrêtant l'exécution des instructions si ces conditions sont vérifiées,
- des moyens pour retarder l'arrêt si les conditions qui sont vérifiées portent sur les bus d'adresses,
- et des moyens pour retarder la vérification des conditions, par rapport à l'apparition des valeurs présentes sur les bus, si les conditions portent sur les bus de données.

On peut ainsi optimiser le test d'un circuit comprenant au moins deux mémoires en proposant la combinaison de points d'arrêt entre deux mémoires, ou entre les bus d'adresses et de données d'une même mémoire.

Avantageusement, le circuit est caractérisé en ce que les moyens d'arrêt arrêtent l'exécution des instructions si les conditions d'une combinaison sont vérifiées lors du traitement d'une même instruction.

On pourra ainsi tester le simultanéité de deux points d'arrêt.

Avantageusement, le circuit est caractérisé en ce que les moyens d'arrêt n'arrêtent l'exécution des instruction que si, au cours du traitement d'une instruction, les conditions d'une combinaison relatives à la valeur présente sur un bus d'une des mémoires et aux valeurs des signaux de commande d'accès à cette mémoire sont vérifiées, les autres conditions de la combinaison, relatives soit à la valeur présente sur l'autre bus de cette mémoire, soit à la valeur présente sur un bus de l'autre mémoire et aux valeurs des signaux de commande d'accès à cette autre mémoire, ayant été vérifiées antérieurement au cours du traitement d'une autre instruction.

On pourra ainsi tester la consécution de deux points d'arrêt.

Avantageusement, le circuit est agencé de telle manière que si une instruction est décodée alors que des conditions sont vérifiées, les moyens d'arrêt arrêtent l'exécution des instructions après l'exécution de cette instruction.

On prévoit ainsi que toute instruction décodée sera exécutée. Le traitement d'une instruction comprend successivement une phase d'adressage, une phase de décodage et une phase d'exécution. Ainsi, une unité centrale traitant les instructions d'une manière dite en pipeline, dans laquelle quand on exécute une instruction, on décode simultanément l'instruction suivante, on n'aura pas à redécoder l'instruction suivant une instruction dont l'exécution correspond à la vérification de conditions d'arrêt.

L'invention sera mieux comprise, et d'autres particularités et avantages de l'invention apparaîtront dans la description ci-après d'un exemple de réalisation préféré et non limitatif, lue conjointement aux dessins annexés, dans lesquels :
- la figure 1 est un schéma d'un circuit intégré selon l'invention,
- la figure 2 est un schéma d'une partie du circuit de la figure 1, cette partie comprenant des moyens d'arrêt pour produire un signal d'arrêt d'exécution des instructions,
- la figure 3 est un chronogramme illustrant une structure de type pipeline,
- les figures 4 à 9 illustrent des circuits mis en oeuvre dans différentes configurations de point d'arrêt.

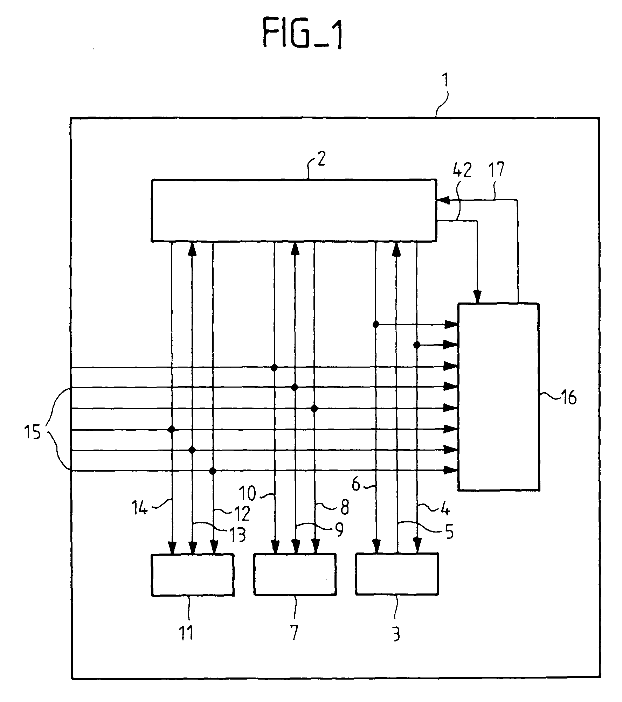

En référence à la figure 1, un circuit intégré 1 selon l'invention, comporte :
- une unité centrale 2,
- une mémoire de programme 3, reliée à l'unité centrale 2 par un bus d'adresses 4, un bus de données 5, et des lignes, représentées collectivement par une référence 6, fournissant un signal de commande d'accès en lecture et un signal de commande d'accès en écriture,
- une première mémoire de données 7 reliée à l'unité centrale 2 par un bus d'adresses 8, un bus de données 9, et des lignes, représentées collectivement par une référence 10, fournissant un signal de commande d'accès en lecture et un signal de commande d'accès en écriture, et
- une deuxième mémoire de données 11 reliée à l'unité centrale 2 par un bus d'adresses 12, un bus de données 13 et des lignes de commande, représentées collectivement par une référence 14, fournissant un signal de commande en lecture et un signal de commande en écriture.

Dans un exemple, le circuit intégré 1 est dédié au traitement de signaux et l'unité centrale 2 comporte les éléments essentiels d'un processeur de traitement de signal, les deux mémoires de données 6 et 11 permettant de traiter des données en parallèle. Un tel circuit comporte bien entendu d'autres dispositifs tels que, par exemple, un ou plusieurs dispositifs d'interface, des dispositifs de calcul etc..., non représentés ici.

Dans l'exemple décrit, les bus d'adresses, de données et les lignes fournissant les signaux de commande d'accès des mémoires de données 6 et 11 sont reliés à des accès primaires 15 du circuit intégré 1.

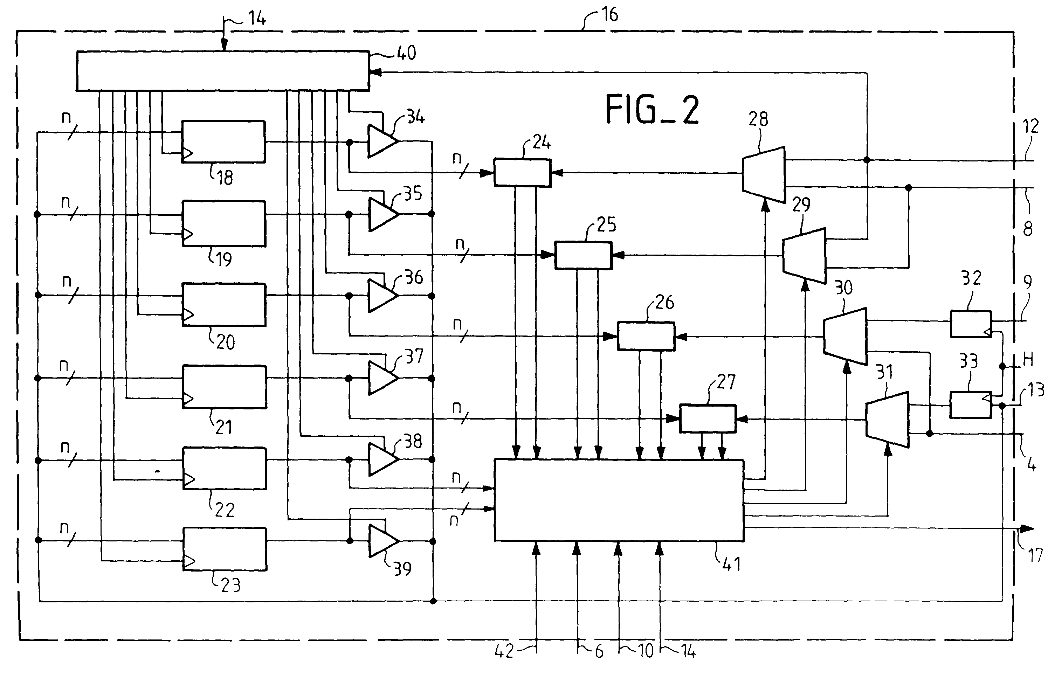

Le circuit intégré 1 comprend également un circuit dit d'arrêt 16, illustré à la figure 2, relié au bus d'adresse 4 et aux lignes 6 de la mémoire de programme 3, et au bus d'adresses 8 et 12, de données 9 et 13, et aux lignes 10 et 14 des mémoires de données 7 et 11. Classiquement, la mémoire de programme 3 contient un programme d'instructions exécutables par l'unité centrale 2. Le circuit d'arrêt est également relié à l'unité centrale 2, par une ligne 17, fournissant un signal logique de commande HALT, de telle manière que l'exécution des instructions est arrêtée quand le signal HALT est dans un état logique donné, par exemple si HALT = 1.

Le circuit d'arrêt 16, illustré à la figure 2 comprend six registres maîtres-esclaves 18, 19, 20, 21, 22 et 23, quatre circuits de comparaison 24, 25, 26 et 27, un circuit de contrôle 41.

Dans un exemple, les six registres maîtres-esclaves sont de type parallèle-parallèle, c'est-à-dire ayant n entrées et n sorties, avec n un entier.

Les entrées des six registres sont toutes reliées à n fils d'un bus comprenant au moins n fils. Dans l'exemple, on a choisi le bus de données 13 de la deuxième mémoire de données 11.

De même, les sorties des six registres sont toutes reliées à n fils de ce même bus par des circuits tampon trois états (en anglais, tristate buffer), permettant ainsi de connecter ou d'isoler les sorties des registres du bus.

Chaque registre reçoit un signal de commande logique tel que, par exemple, il échantillonne sur front montant de ce signal.

Les signaux de commande sont fournis aux registres par un circuit de décodage 40 qui est relié au bus d'adresses 12 de la deuxième mémoire 11.

Ce circuit de décodage 40 fournit également des signaux logiques de commande à chaque circuit tampon trois états afin de connecter ou d'isoler les sorties des registres du bus de données 13. Enfin, le circuit de décodage 40 est également relié aux lignes 14 fournissant les signaux de commande d'accès associés à la mémoire 11.

Les registres maîtres-esclaves 18 à 23 sont, dans l'exemple, des registres configurables à adresse mémoire virtuelle (en anglais, memory mapped) . Ce type de registre, connu en soi, est accessible en lecture, pour en lire le contenu, ou en écriture, pour y mémoriser des valeurs, et ils sont utilisés dans l'exemple pour mémoriser les points d'arrêts (ou conditions) associés aux différents bus des mémoires du circuit 1, à l'exception du bus de données 5 de la mémoire de programme.

Pour lire ou écrire dans ces registres, on leur affecte une adresse correspondant à une adresse de la deuxième mémoire de données 11. Le circuit de décodage 40, quand il reconnaît une adresse d'un des registres sur le bus d'adresses 12, produit les signaux adéquats pour positionner le contenu du registre sur le bus de données 13 ou mémoriser les valeurs des n fils de ce bus, connectés aux n entrées de ce registre, dans le registre, suivant la valeur des signaux de commande d'accès à la mémoire 11.

Ainsi, on prévoit que les points d'arrêt seront programmables, et que les registres servant à mémoriser ces points d'arrêt seront accessibles sans liaisons dédiées spécifiquement à cette fin, ce qui permet de limiter le nombre de bornes du circuit intégré et de limiter également la surface de ce circuit. Ces registres à adresse mémoire virtuelle auraient tout aussi bien pu être reliés au bus de données de la première mémoire de donnée.

Dans l'exemple décrit, on considérera que tous les bus des différentes mémoires ont un nombre identique n de fils. Par exemple n = 16.

Les quatres premiers registres maîtres-esclaves 18 à 21 sont chacun reliés, par le biais de leurs n sorties, à l'un des quatre circuits de comparaison 24 à 27. Chaque circuit de comparaison a n entrées reliées à n sorties d'un des registres 18 à 21, n autres sorties reliées à n sorties d'un multiplexeur 28 à 31 parmi quatre, et deux sorties reliées au circuit de contrôle 41 pour lui fournir des signaux logiques représentatifs de la comparaison entre les valeurs présentes sur ses n entrées reliées à un des registres, et ses n entrées reliées à la sortie d'un des multiplexeurs.

Les signaux logiques représentatifs de la comparaison pourront par exemple être un signal représentatif d'une égalité entre les deux séries de n entrées s'il est dans un état logique donné, par exemple l'état 1, et un signal représentatif d'une supériorité, la comparaison s'effectuant bien entendu sur des nombres binaires, de la valeur codée sur n bits, présente en sortie du registre par rapport à celle présente sur les n sorties du multiplexeur, quand ce deuxième signal est dans un état logique donné, par exemple l'état 1. Ces signaux pourraient tout aussi bien être représentatifs de relations de différence, d'infériorité stricte ou non, etc.

En notant VR la valeur, codée sur n bits, reçue par un des circuit de comparaison d'un des registres et VM la valeur, codée sur n bits, reçue par ce même circuit de comparaison, d'un des multiplexeurs, et en codant le résultat de la comparaison de VR et VM sur deux états logiques, on couvre tous les cas de figures possibles : VR = VM, VR ≠ VM, VR > VM, VR < VM, VR ≥ VM et VR ≤ VM.

Le premier circuit de comparaison 24 est relié à un premier multiplexeur 28 recevant en entrée les n fils du bus d'adresses 12 et les n fils du bus d'adresses 8. Ce multiplexeur reçoit du circuit de contrôle 41 un signal logique de commande pour relier sélectivement ses n fils de sorties aux n fils du bus 12 ou aux n fils du bus 8. Sur ses autres entrées, le premier circuit de comparaison est relié aux n sorties du registre 18.

Le deuxième circuit de comparaison 25 est relié à un second multiplexeur 29 recevant également en entrée les n fils du bus d'adresses 12 et les n fils du bus d'adresses 8. Ce multiplexeur reçoit du circuit de contrôle 41 un signal logique de commande pour relier sélectivement ses n fils de sorties aux n fils du bus 12 ou aux n fils du bus 8. Sur ses autres entrées, le second circuit de comparaison est relié aux n sorties du registre 19.

Le troisième circuit de comparaison 26 est relié à un troisième multiplexeur 30 recevant en entrée d'une part les n fils du bus d'adresses 4, et d'autre part les n fils du bus de données 9 par le biais de n sorties d'un registre maître-esclave 32 ayant n entrées reliées aux n fils de ce bus 9. De même que précédemment, ce troisième multiplexeur reçoit du circuit de contrôle 41 un signal logique de commande pour relier sélectivement n de ses entrées à ses n sorties. Sur ses autres entrées, le troisième circuit de comparaison est relié aux n sorties du registre 20.

Le quatrième circuit de comparaison 27 est relié à un quatrième multiplexeur 31 recevant en entrée d'une part les n fils du bus d'adresses 4, et d'autre part les n fils du bus de données 13 par le biais de n sorties d'un registre maître-esclave 33 ayant n entrées reliées aux n fils de ce bus 13. De même que précédemment, ce quatrième multiplexeur reçoit du circuit de contrôle 41 un signal logique de commande pour relier sélectivement n de ses entrées à ses n sorties. Sur ses autres entrées, le quatrième circuit de comparaison est relié aux n sorties du registre 21.

Les deux derniers registres maîtres-esclaves 22 et 23 sont reliés au circuit de contrôle 41 par leurs n sorties, ce circuit de contrôle étant d'autre part relié aux lignes 6, 10 et 14 fournissant les signaux de commande d'accès aux différentes mémoires.

Enfin, le circuit de contrôle a une sortie reliée à la ligne 17 fournissant le signal logique HALT à l'unité centrale 2.

Le but du circuit 16 est de permettre d'arrêter l'exécution des instructions du programme contenu dans la mémoire de programme 3 quand des conditions (ou point d'arrêt) sont vérifiées concernant un bus particulier parmi les bus reliant les mémoires à l'unité centrale, ou quand une combinaison de conditions est vérifiée sur deux bus différents parmi ces bus.

Ainsi, en utilisant l'un des circuits de comparaison 24 ou 25, on pourra placer un point d'arrêt sur le bus d'adresses d'une des mémoires de donnée. En utilisant simultanément ces deux circuits, on pourra placer un point d'arrêt sur les deux bus d'adresses simultanément.

En utilisant les circuits de comparaison 26 et 27, on pourra placer un point d'arrêt soit sur le bus de données d'une mémoire de données, soit sur les deux bus de données des deux mémoires, soit sur le bus d'adresses de la mémoire de programme, ou sur ce bus d'adresses et un des bus de données.

En utilisant un des circuits de comparaison 24 ou 25, simultanément avec l'un des circuits de comparaison 26 ou 27, on pourra placer un point d'arrêt au choix sur le bus d'adresses et le bus de données d'une même mémoire de données, sur les bus d'adresses d'une mémoire de données et de la mémoire de programme, etc...

Par placer un point d'arrêt, on entend définir des conditions, telles que si ces conditions sont vérifiées, par le biais du circuit de contrôle 41, l'exécution des instruction par l'unité centrale est arrêtée.

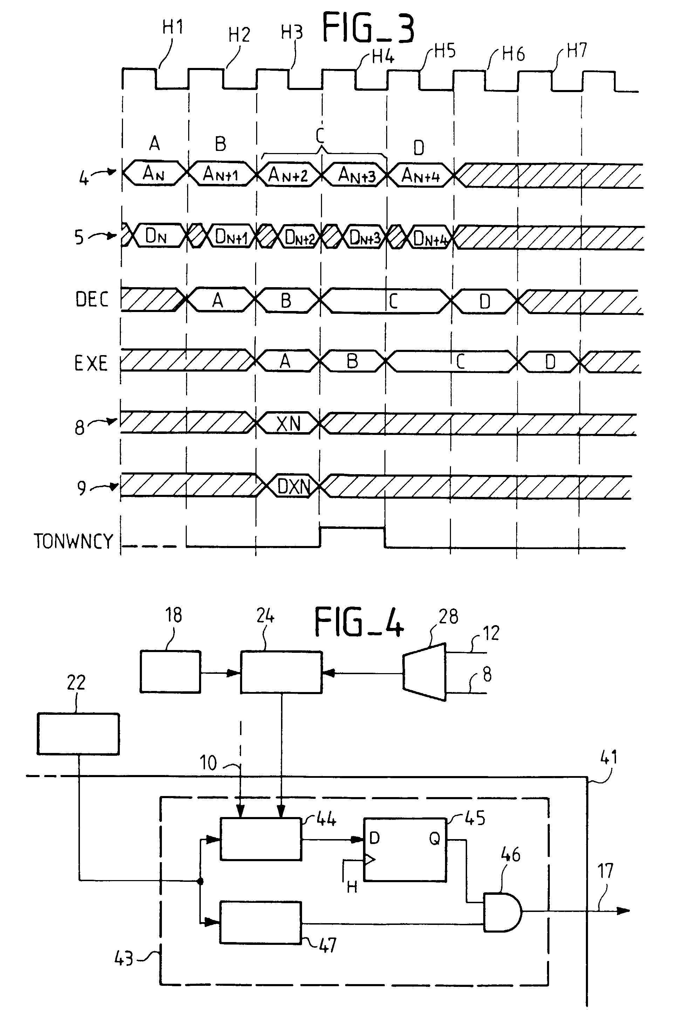

La figure 3 illustre un chronogramme représentatif des signaux qu'on peut trouver sur les différents bus de données et d'adresses des mémoires du circuit.

Classiquement, le traitement d'une instruction à exécuter se caractérise successivement par :
- le positionnement par un compteur de programme, non représenté, de l'adresse du mot ou des adresses successives des mot (par mot, on entend le contenu présent à une adresse de la mémoire de programme) de l'instruction sur le bus d'adresses 4 de la mémoire de programme,
- le décodage des mots par un séquenceur, non représenté, après leur positionnement par la mémoire de programme sur le bus de données 5,
- l'exécution de l'instruction par l'unité centrale.

Typiquement, ces opérations sont synchronisées sur un signal d'horloge H, produit par exemple par un quartz.

La figure 3 illustre un enchaînement des traitements d'instructions successives dans une structure de type pipeline, couramment utilisée. Dans ce type d'enchaînement, on positionne les adresses sur le bus 4 en même temps que l'on décode les mots correspondants aux adresses précédentes, et que l'on exécute les instructions correspondantes aux mots précédemment décodés.

La figure 3 illustre un exemple d'une succession de quatre instructions A, B, C, D, les instructions A, B et D nécessitant un seul accès à la mémoire de programme et l'instruction C en nécessitant deux.

Ainsi :
- A est codée sur un mot noté D_{N} situé à une adresse de la mémoire de programme notée A_{N},
- B est codée sur un mot noté D_{N+1} situé à une adresse de la mémoire de programme notée A_{N+1},
- C est codée sur deux mots notés D_{N+2} et D_{N+3} situés à deux adresses de la mémoire de programme notées A_{N+2} et A_{N+3},
- D est codée sur un mot noté D_{N+4} situé à une adresse de la mémoire de programme notée A_{N+4},

Dans l'exemple décrit, on suppose que la synchronisation des différentes opérations d'adressage, de décodage et d'exécution est faite sur front montant du signal d'horloge.

En notant Hj, j entier, les cycles successifs (ou périodes du signal d'horloge) et en notant H1 le cycle correspondant au positionnement de l'adresse A_{N} sur le bus d'adresses de la mémoire de programme, on aura le schéma temporel suivant :
H1 : adressage du mot D_{N} de l'instruction A,
H2 : adressage du mot D_{N+1} de l'instruction B, décodage de A,
H3 : adressage du mot D_{N+2} de l'instruction C, décodage de B, exécution de A,
H4 : adressage du mot D_{N+3} de l'instruction C début du décodage C, exécution de B,
H5 : adressage du mot D_{N+4} de l'instruction D, fin du décodage de C, début de l'exécution de C,
H6 : décodage de D, fin de l'exécution de C,
H7 : exécution de D.

Quand on positionne une adresse sur le bus d'adresses d'une mémoire de manière à lire le contenu de la mémoire à cette adresse, ce contenu est placé lors du même cycle sur le bus de données de cette mémoire, avec un certain retard par rapport au début du cycle, ce retard résultant du temps nécessaire pour que la mémoire accède à cette adresse et du temps nécessaire pour que la mémoire positionne le contenu de l'adresse sur un son bus de données.

Par ailleurs, on voit bien qu'il y a un délai correspondant à deux temps de cycle entre le début du cycle lors duquel on positionne l'adresse d'un mot sur le bus d'adresses de la mémoire de programme et le début du cycle lors duquel ce mot a un effet sur l'état électrique des autres bus du circuit. Ainsi, si l'instruction A correspond à la lecture du contenu d'une adresse XN de la mémoire de donnée 7, cette adresse XN sera positionnée sur le bus d'adresses 8 de cette mémoire au début du cycle H3, et le contenu de cette adresse XN sera positionné sur le bus de données 9 de cette mémoire lors de ce cycle, un certain temps après le début de ce cycle.

Enfin, sur la figure 3, on représente un signal logique TONWNCY produit par l'unité centrale de telle manière que si une instruction nécessite q cycles pour son décodage, q entier supérieur à 1, ce signal est à un état donné, ici l'état 1, durant les q-1 premiers temps de cycles nécessaires au décodage de cette instruction, et à l'état complémentaire sinon. Ainsi, ici, le signal TONWNCY est à l'état 1 lors du cycle H4 et à l'état 0 sinon. Ce signal est reçu par le circuit de contrôle 41 par le biais d'une ligne 42 le reliant à l'unité centrale.

On va maintenant décrire des circuits mis en oeuvre dans le circuit 16 en étudiant différents cas représentatifs des possibilités de gestion de point d'arrêt qu'offre l'invention.

Les figures 4 à 9 illustrent des éléments du circuit de contrôle 41 permettant de produire le signal logique HALT.

Comme on l'a indiqué, le circuit de contrôle reçoit les signaux permettant de connaître le résultat de la comparaison entre les valeurs reçues par chaque circuit de comparaison et les signaux de commande d'accès aux différentes mémoires.

La définition des conditions d'arrêt de l'exécution du programme comporteront donc logiquement :
- la sélection d'un ou de deux bus sur lequel ou lesquels porte le point d'arrêt, cette sélection influençant directement les valeurs des signaux de commande des multiplexeurs 28 à 31,
- la sélection de l'état des signaux de commande d'accès à la ou aux mémoires auxquelles correspondent ces bus,
- la sélection d'une relation entre la ou les valeurs contenues dans les registres 18 à 21 et la ou les valeurs présentes sur ce ou ces bus.

Une analyse des différents cas de figures envisageables a amené à définir, comme on l'a vu, trois types de point d'arrêt :
- un type de point d'arrêt que l'on pourrait qualifier de classique, portant sur les valeurs d'un bus d'une des mémoires,
- un type de point d'arrêt dit de simultanéité, portant sur une combinaison des valeurs présentes sur deux bus, cette combinaison devant être vérifiée au cours du traitement d'une même instruction,
- un type de point d'arrêt dit de consécution, portant sur une combinaison des valeurs présentes sur deux bus, de telle manière que l'exécution des instructions est arrêtée si des conditions sont vérifiées pour un bus alors que d'autres conditions ont été précédemment vérifiées pour l'autre bus.

En pratique, on peut définir, pour chaque type de point d'arrêt, un certain nombre d'applications intéressantes, en limitant ce nombre afin de limiter la taille du circuit de contrôle :
- Type classique (5 cas) : point d'arrêt sur le bus d'adresses d'une des mémoires ou sur le bus de données d'une des mémoires de données. On ne s'intéresse pas à priori aux valeurs présentes sur le bus de données de la mémoire de programme, puisqu'a priori on connaît le contenu des adresses de cette mémoire.
- Type de simultanéité (6 cas) : point d'arrêt sur les bus d'une mémoire de données, sur les bus d'adresses des mémoires de données, sur les bus de données des mémoires de données, sur les bus d'adresses d'une mémoire de données et de la mémoire de programme,
- Type de consécution (7 cas) : point d'arrêt sur les bus d'adresses d'une mémoire de données et de la mémoire de programme avec antériorité de la vérification de conditions sur le bus de la mémoire de programme, sur les bus d'adresses des mémoires de données avec antériorité de la vérification de conditions sur le bus d'une des mémoires, sur les bus de données et d'adresses d'une mémoire de données avec antériorité de la vérification de conditions sur le bus d'adresses de la mémoire, sur le bus d'adresses de la mémoire de programme avec antériorité de la vérification de la présence d'une certaine valeur sur ce bus par rapport à la vérification de la présence d'une autre valeur.

Dans l'invention, les points d'arrêt sont configurables, c'est-à-dire que l'on peut changer les différents paramètres définis ci-dessus, et on utilise les registres 22 et 23 pour mémoriser les conditions souhaitées.

En notant R0 à Rn-1, les valeurs mémorisées dans le registre 22, et R'0 à R'n-1, les valeurs mémorisées dans le registre 23, , on pourra par exemple affecter :
- R0 à la sélection du bus relié au circuit de comparaison 24 par le biais du multiplexeur 28,
- R1 et R2 à la sélection de l'état des signaux d'accès à la mémoire correspondant au bus sélectionné,
- R3 et R4 à la sélection d'une relation entre la valeur présente à la sortie du registre 18 et la valeur présente sur le bus sélectionné,
- R5 et R6 à la sélection d'une combinaison ou non de conditions entre le bus sélectionné par R0 et un autre bus relié à l'un des circuits de comparaison 25 ou 26,
- R7 à la sélection du bus relié au circuit de comparaison 25 par le biais du multiplexeur 29,
- R8 et R9 à la sélection de l'état des signaux d'accès à la mémoire correspondant au bus sélectionné,
- R 10 et R11 à la sélection d'une relation entre la valeur présente à la sortie du registre 19 et la valeur présente sur le bus sélectionné,
- R12 et R13 à la sélection d'une combinaison ou non de conditions entre le bus sélectionné par R5 et un autre bus relié à l'un des circuits de comparaison 24 ou 27,
- R14 et R15 : non affectés,
- R'0 à la sélection du bus relié au circuit de comparaison 26 par le biais du multiplexeur 30,
- R'1 et R'2 à la sélection de l'état des signaux d'accès à la mémoire correspondant au bus sélectionné,
- R'3 et R'4 à la sélection d'une relation entre la valeur présente à la sortie du registre 20 et la valeur présente sur le bus sélectionné,
- R'5 et R'6 à la sélection d'une combinaison ou non de conditions entre le bus sélectionné par R'0 et un autre bus relié au circuit de comparaison 27,
- R'7 à la sortie du bus relié au circuit de comparaison 27 par le biais du multiplexeur 31,
- R'8 et R'9 à la sélection de l'état des signaux d'accès à la mémoire correspondant au bus sélectionné.
- R'10 et R'11 à la sélection d'une relation entre la valeur présente à la sortie du registre 21 et la valeur présente sur le bus sélectionné,
- R'12 à R'15 : non affectés.

On va maintenant décrire les moyens mis en oeuvre pour traiter 5 des cas précédemment cités.

### Point d'arrêt sur un bus d'adresses d'une mémoire de donnée (figure 4).

La figure 4 illustre les moyens mis en oeuvre quand on souhaite placer un point d'arrêt sur le bus d'adresses 8 de la mémoire de données 7.

Pour contrôler si les conditions du point d'arrêt sont vérifiées, on peut utiliser au choix l'un des circuits de comparaison 24 ou 25. Dans l'exemple décrit, on utilise le circuit de comparaison 24, la valeur présente sur le bus d'adresses 8 étant de fait comparée à la valeur présente sur les sorties du registre 18.

Pour permettre d'arrêter l'exécution d'instructions par l'unité centrale, le circuit de contrôle 41 comprend un circuit 43 pour fournir le signal logique HALT.

Ce circuit 43 comprend :
- un circuit de comparaison 44,
- une bascule maître-esclave 45 échantillonnant sur front montant du signal d'horloge H,
- une porte logique ET 46 à deux entrées,
- un circuit de sélection 47.

Le circuit de comparaison 44 est reliée aux lignes 10 véhiculant les signaux de commande d'accès à la mémoire 7, aux sorties du circuit de comparaison 24 et à des sorties du registre 22. Ce circuit 44 a une sortie pour fournir un signal logique tel que ce signal est dans un état donné si les conditions d'arrêt mémorisées dans le registre 22 sont vérifiées sur les lignes 10 et les sorties du circuit de comparaison 24. Par exemple, le signal produit par le circuit de comparaison 44 sera à l'état 1 si les conditions sont vérifiées et à 0 sinon.

La sortie du circuit de comparaison 44 est reliée à l'entrée de la bascule 45. La sortie de cette bascule 45 est reliée à une entrée de la porte logique ET 46. L'autre entrée de cette porte ET est reliée à une sortie du circuit de sélection 47. Ce circuit 47, non décrit, est reliée à des sorties du registre 22 et agencé de telle manière le signal présent à sa sortie est à l'état 1 si les valeurs des bits du registre 22 correspondent à la sélection d'un point d'arrêt sur le bus 8.

La sortie de la porte ET 46 est reliée à la ligne 17 véhiculant le signal HALT.

Ainsi, si lors d'un cycle toutes les conditions attendues sont vérifiées sur le bus d'adresses 8 et les lignes 10, le signal HALT passera à 1 au début du cycle suivant.

Pour placer un point d'arrêt sur le bus d'adresses 12 de l'autre mémoire de données 11, il suffit de dupliquer le circuit 43, en adaptant les liaisons entre ce circuit et son environnement à ce cas particulier.

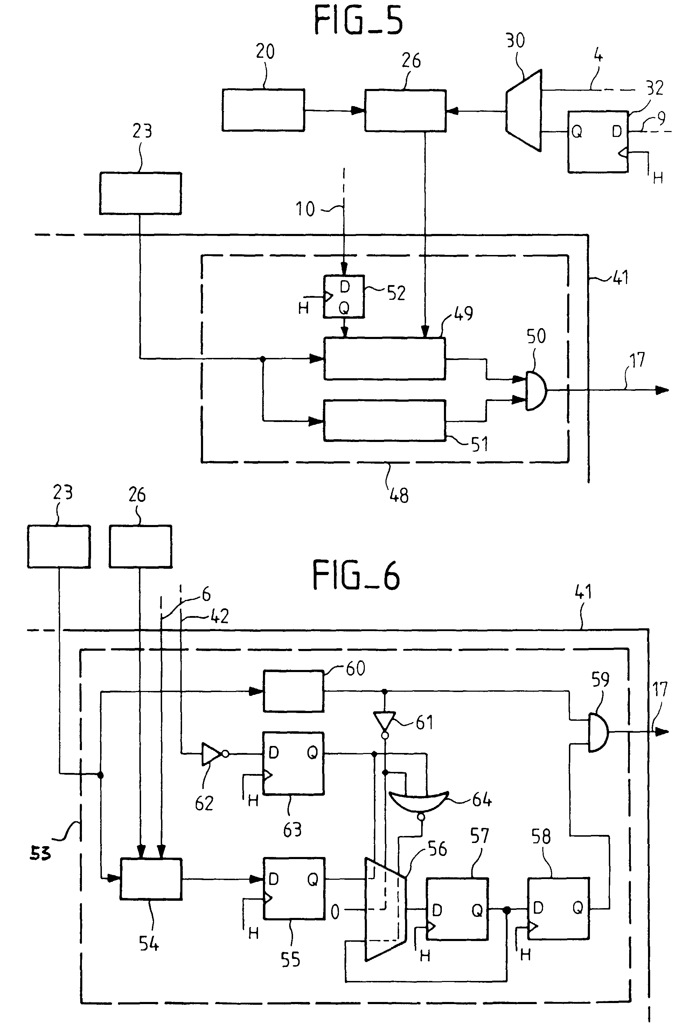

### Point d'arrêt sur un bus de données d'une mémoire de donnée (figure 5).

La figure 5 illustre les moyens mis en oeuvre quand on souhaite placer un point d'arrêt sur le bus de données 9 de la mémoire de données 7.

Pour contrôler si les conditions du point d'arrêt sont vérifiées, on utilise le circuit de comparaison 26. La valeur présente sur le bus de données 9 est comparée à la valeur présente sur les sorties du registre 20.

Pour permettre d'arrêter l'exécution d'instructions par l'unité centrale, le circuit de contrôle 41 comprend un circuit 48 pour fournir le signal logique HALT.

Ce circuit 48 comprend :
- un circuit de comparaison 49,
- une porte logique ET 50 à deux entrées,
- un circuit de sélection 51,
- une bascule maître-esclave 52 à deux entrées et deux sorties, échantillonnant sur front montant du signal d'horloge.

La bascule maître-esclave 51 reçoit sur ses entrées les lignes 10 véhiculant les signaux de commande d'accès à la mémoire 7.

Le circuit de comparaison 49 est reliée aux sorties de la bascule 51, aux sorties du circuit de comparaison 26 et à des sorties du registre 23. Ce circuit 44 a une sortie pour fournir un signal logique tel que ce signal est dans un état donné si les conditions d'arrêt mémorisées dans le registre 23 sont vérifiées sur les lignes 10 et les sorties du circuit de comparaison 26. Par exemple, le signal produit par le circuit de comparaison 44 sera à l'état 1 si les conditions sont vérifiées et à 0 sinon.

La sortie du circuit de comparaison 49 est reliée à une entrée de la porte logique ET 50. L'autre entrée de cette porte ET est reliée à une sortie du circuit de sélection 51 qui joue un rôle équivalent à celui du circuit de sélection 47 de la figure 4.

La sortie de la porte ET 50 est reliée à la ligne 17 véhiculant le signal HALT.

Ainsi, si lors d'un cycle, toutes les conditions attendues sont vérifiées sur le bus de données 9 et les lignes 10, le signal HALT passera à 1 au début du cycle suivant.

Dans le cas d'un bus de données, les données ne sont pas positionnées sur le bus au début d'un cycle mais en cours de cycle. C'est pourquoi, au lieu de retarder l'arrêt après comparaison, comme dans le cas décrit ci-dessus, on retarde la comparaison grâce aux bascules 52 et 32 (dans le cas du bus 9), la bascule 32 échantillonnant sur front montant de l'horloge H.

Pour placer un point d'arrêt sur le bus de données 13 de l'autre mémoire de données 11, il suffit de dupliquer le circuit 48, en adaptant les liaisons entre ce circuit et son environnement à ce cas particulier.

### Point d'arrêt sur le bus d'adresses 4 de la mémoire de programme 3 (figure 6).

La figure 6 illustre les moyens mis en oeuvre quand on souhaite placer un point d'arrêt sur le bus d'adresses 4 de la mémoire de programme 3.

Pour contrôler si les conditions du point d'arrêt sont vérifiées, on utilise au choix l'un des circuits de comparaison 26 ou 27. Dans l'exemple illustré, on utilise le circuit de comparaison 26. La valeur présente sur le bus d'adresses 4 est comparée à la valeur présente sur les sorties du registre 20.

Pour permettre d'arrêter l'exécution d'instructions par l'unité centrale, le circuit de contrôle 41 comprend un circuit 53 pour fournir le signal logique HALT.

Ce circuit 53 comprend :
- un circuit de comparaison 54,
- une première bascule maître-esclave 55 échantillonnant sur front montant du signal d'horloge H,
- un multiplexeur 56 à trois entrées et une sortie,
- une deuxième bascule maître-esclave 57 échantillonnant sur front montant du signal d'horloge H,
- une troisième bascule maître-esclave 58 échantillonnant sur front montant du signal d'horloge H,
- une porte logique ET 59 à deux entrées,
- un circuit de sélection 60,
- un premier inverseur 61,
- un deuxième inverseur 62,
- une quatrième bascule maître-esclave 63 échantillonnant sur front montant du signal d'horloge H, et
- une porte logique NON OU à deux entrées.

Le circuit de comparaison 54 est reliée aux lignes 6, aux sorties du circuit de comparaison 26 et à des sorties du registre 23. Ce circuit 54 a une sortie pour fournir un signal logique tel que ce signal est dans un état donné si les conditions d'arrêt mémorisées dans le registre 23 sont vérifiées sur les lignes 6 et les sorties du circuit de comparaison 26. Par exemple, le signal produit par le circuit de comparaison 54 sera à l'état 1 si les conditions sont vérifiées et à 0 sinon.

La sortie du circuit de comparaison 54 est reliée à l'entrée de la première bascule maître-esclave 55. La sortie de cette première bascule est reliée à une première entrée du multiplexeur 56.

Le multiplexeur a une seconde entrée maintenue à un état logique 0 permanent.

La sortie du multiplexeur 56 est reliée à l'entrée de la deuxième bascule 57. La sortie de cette bascule 57 est reliée d'une part à la troisième entrée du multiplexeur 56, et d'autre part à l'entrée de la troisième bascule 58.

La sortie de la bascule 58 est reliée à une entrée de la porte ET 59. Cette porte 59 a son autre entrée reliée à une sortie du circuit de sélection 60 qui joue un rôle équivalent à celui du circuit de sélection 47 de la figure 4. La sortie de la porte ET 59 est reliée à la ligne 17 véhiculant le signal HALT.

La troisième bascule 63 est reliée à la ligne 42 par le biais de l'inverseur 62, et reçoit donc le signal/TONWNCY. Cette bascule a sa sortie reliée à une première entrée de commande du multiplexeur 56 de telle manière que la sortie de ce multiplexeur est reliée à sa première entrée si le signal présent en sortie de la bascule 63 est à l'état 1.

La sortie du circuit de sélection 60 est reliée par le biais de l'inverseur 61 à une deuxième entrée de commande du multiplexeur 56 de telle manière que la sortie de ce multiplexeur est reliée à sa deuxième entrée si le signal présent la dite entrée de commande est à l'état 1.

Enfin, le multiplexeur 56 a une troisième entrée de commande reliée à la sortie de la porte NON OU 64, les deux entrées de cette porte NON OU étant reliées chacune à une des deux autres entrées de commande de ce multiplexeur.

Ainsi, si lors d'un cycle, toutes les conditions attendues sont vérifiées sur le bus d'adresses 4 et les lignes 6, le signal HALT passera à 1 au début du cycle suivant celui qui marque la fin de l'exécution de l'instruction à laquelle correspond l'adresse présente sur le bus quand les conditions sont vérifiées.

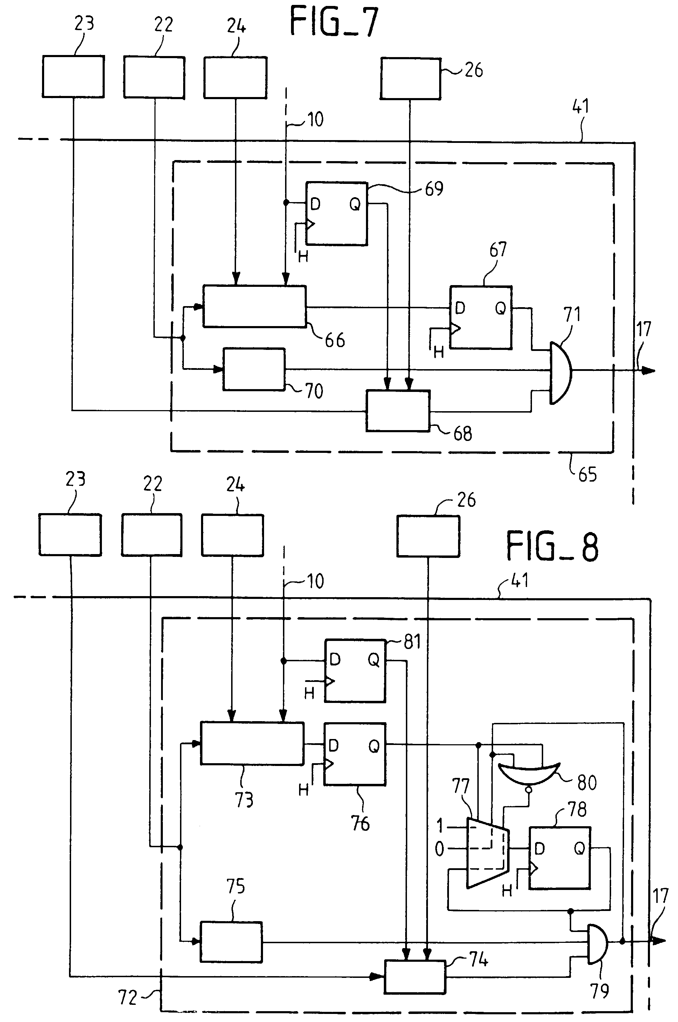

### Point d'arrêt sur le bus de données et le bus d'adresses d'une mémoire de donnée, les conditions devant être vérifiées lors de l'exécution d'une même instruction (figure 7).

La figure 7 illustre les moyens mis en oeuvre quand on souhaite placer un point d'arrêt sur le bus d'adresses 8 et sur le bus de données 9 de la mémoire de données 7, des conditions devant être vérifiées pour chaque bus lors de l'exécution d'une même instruction.

Pour contrôler si les conditions du point d'arrêt sont vérifiées, on peut utiliser au choix l'un des circuits de comparaison 24 ou 25, et le circuit de comparaison 26. Dans l'exemple décrit, on utilise les circuits de comparaison 24 et 26, la valeur présente sur le bus d'adresses 8 étant de fait comparée à la valeur présente sur les sorties du registre 18, et celle présente sur le bus de données 9 étant comparée à la valeur présente sur les sorties du registre 20.

Pour permettre d'arrêter l'exécution d'instructions par l'unité centrale, le circuit de contrôle 41 comprend un circuit 65 pour fournir le signal logique HALT.

Ce circuit 65 comprend :
- un premier circuit de comparaison 66,
- une première bascule maître-esclave 67 échantillonnant sur front montant du signal d'horloge H,
- un deuxième circuit de comparaison 68,
- une deuxième bascule maître-esclave 69 à deux entrées et deux sorties échantillonnant sur front montant du signal d'horloge H,
- un circuit de sélection 70,
- une porte logique ET 71 à trois entrées,

Le premier circuit de comparaison 66 est reliée aux lignes 10 véhiculant les signaux de commande d'accès à la mémoire 7, aux sorties du circuit de comparaison 24 et à des sorties du registre 22. Ce circuit 66 a une sortie pour fournir un signal logique tel que ce signal est dans un état donné si les conditions d'arrêt mémorisées dans le registre 22 sont vérifiées sur les lignes 10 et les sorties du circuit de comparaison 24. Par exemple, le signal produit par le circuit de comparaison 66 sera à l'état 1 si les conditions sont vérifiées et à 0 sinon.

La sortie du circuit de comparaison 66 est reliée à l'entrée de la première bascule 67. La sortie de cette bascule 67 est reliée à une entrée de la porte logique ET 71. Une autre entrée de cette porte ET est reliée à une sortie du circuit de sélection 70. Ce circuit 70 joue le même rôle que le circuit de sélection 47 de la figure 4.

La sortie de la porte ET 71 est reliée à la ligne 17 véhiculant le signal HALT.

La deuxième bascule maître-esclave 69 reçoit sur ses entrées les lignes 10 véhiculant les signaux de commande d'accès à la mémoire 7.

Le deuxième circuit de comparaison 68 est reliée aux sorties de la bascule 69, aux sorties du circuit de comparaison 26 et à des sorties du registre 23. Ce circuit 68 a une sortie pour fournir un signal logique tel que ce signal est dans un état donné si les conditions d'arrêt mémorisées dans le registre 23 sont vérifiées sur les lignes 10 et les sorties du circuit de comparaison 26. Par exemple, le signal produit par le circuit de comparaison 68 sera à l'état 1 si les conditions sont vérifiées et à 0 sinon.

La sortie du circuit de comparaison 68 est reliée à la dernière entrée de la porte logique ET 71.

Ainsi, si lors d'un cycle, toutes les conditions attendues sont vérifiées sur les bus de données 9 et d'adresses 8, et les lignes 10, le signal HALT passera à 1 au début du cycle suivant.

Pour placer un point d'arrêt sur les bus d'adresses 12 et de données 13 de l'autre mémoire de données 11, il suffit de dupliquer le circuit 65, en adaptant les liaisons entre ce circuit et son environnement à ce cas particulier. De même, pour placer les autres points d'arrêt correspondant aux autres cas de simultanéité, on dupliquera autant de fois que nécessaire le circuit décrit ci-dessus en adaptant les liaisons et les éléments des circuits à chaque cas, en se reportant aux figures 4 à 6 en ce qui concerne la constitution de ces circuits.

### Point d'arrêt entre un bus de données et un bus d'adresses d'une mémoire de donnée, l'exécution étant arrêtée si des conditions sont vérifiées sur le bus de données alors que d'autres conditions ont été vérifiées sur le bus d'adresses lors de l'exécution d'une instruction précédente (figure 8).

L'exemple illustré sur la figure 8 permet de traiter ce cas en ce qui concerne la mémoire de données 7.

Pour contrôler si des conditions du point d'arrêt sont vérifiées pour le bus d'adresses 8, on peut utiliser au choix l'un des circuits de comparaison 24 ou 25. Dans l'exemple décrit, on utilise le circuit de comparaison 24, la valeur présente sur le bus d'adresses 8 étant de fait comparée à la valeur présente sur les sorties du registre 18.

Par ailleurs, on utilise le circuit de comparaison 26 pour contrôler si les conditions concernant le bus de données 9 sont vérifiées, et la valeur présente sur ce bus de données 9 est comparée à la valeur présente sur les sorties du registre 20.

Pour permettre d'arrêter l'exécution d'instructions par l'unité centrale, le circuit de contrôle 41 comprend un circuit 72 pour fournir le signal logique HALT.

Ce circuit 72 comprend :
- un premier circuit de comparaison 73,
- un deuxième circuit de comparaison 74,
- un circuit de sélection 75,
- une première bascule maître-esclave 76 échantillonnant sur front montant du signal d'horloge H,
- un multiplexeur 77 à trois entrées,
- une deuxième bascule maître-esclave 78 échantillonnant sur front montant du signal d'horloge H,
- une porte logique ET 79 à trois entrées,
- une porte logique NON OU 80 à deux entrées, et
- une troisième bascule maître-esclave 81 à deux entrées et deux sorties, échantillonnant sur front montant du signal d'horloge H.

Le premier circuit de comparaison 73 est reliée aux lignes 10 véhiculant les signaux de commande d'accès à la mémoire 7, aux sorties du circuit de comparaison 24 et à des sorties du registre 22. Ce circuit 73 a une sortie pour fournir un signal logique tel que ce signal est dans un état donné si les conditions d'arrêt mémorisées dans le registre 22 sont vérifiées sur les lignes 10 et les sorties du circuit de comparaison 24. Par exemple, le signal produit par le circuit de comparaison 73 sera à l'état 1 si les conditions sont vérifiées et à 0 sinon.

La sortie du circuit de comparaison 73 est reliée à l'entrée de la première bascule 76.

Le multiplexeur 77 a une première entrée recevant un signal maintenu à l'état logique 1, une deuxième entrée recevant un signal maintenue à l'état logique 0, et sa dernière entrée reliée à la sortie de la deuxième bascule 78.

La sortie de la bascule 76 est reliée à une première entrée de commande du multiplexeur 77 de manière à ce que la sortie du multiplexeur 77 soit reliée à sa première entrée quand le signal en sortie de la bascule 76 est à l'état 1. Le multiplexeur a une deuxième entrée de commande reliée à la sortie de la porte ET 79 de manière à ce que sa sortie soit reliée à sa deuxième entrée quand le signal en sortie de la porte 79 est à l'état 1. Enfin, Le multiplexeur a une troisième entrée de commande reliée à la sortie de la porte NON OU 80 de manière à ce que sa sortie soit reliée à sa dernière entrée quand le signal en sortie de la porte 80 est à l'état 1.

La porte NON OU 80 a ses entrées reliées chacune à une autre des entrées de commande du multiplexeur 77.

La sortie du multiplexeur 77 est reliée à l'entrée de la bascule 78. La sortie de cette bascule est connectée à une première entrée de la porte ET 79.

Une autre entrée de cette porte ET est reliée à une sortie du circuit de sélection 75. Ce circuit 75 joue le même rôle que le circuit de sélection 47 de la figure 4.

La sortie de la porte ET 79 est reliée à la ligne 17 véhiculant le signal HALT.

La deuxième bascule maître-esclave 81 reçoit sur ses entrées les lignes 10 véhiculant les signaux de commande d'accès à la mémoire 7.

Le deuxième circuit de comparaison 74 est reliée aux sorties de la bascule 81, aux sorties du circuit de comparaison 26 et à des sorties du registre 23. Ce circuit 74 a une sortie pour fournir un signal logique tel que ce signal est dans un état donné si les conditions d'arrêt mémorisées dans le registre 23 sont vérifiées sur les lignes 10 et les sorties du circuit de comparaison 26. Par exemple, le signal produit par le circuit de comparaison 74 sera à l'état 1 si les conditions sont vérifiées et à 0 sinon.

La sortie du circuit de comparaison 74 est reliée à la dernière entrée de la porte logique ET 79.

Ainsi, si lors d'un cycle, toutes les conditions attendues sont vérifiées sur les bus d'adresses 8, la sortie de la bascule 78 fournira un signal d'état logique 1.

Si, ultérieurement, toutes les conditions sont vérifiées sur le bus de données 9, le signal HALT passera à 1 au début du cycle suivant.

Pour placer un point d'arrêt sur les bus d'adresses 12 et de données 13 de l'autre mémoire de donnée 11, il suffit de dupliquer le circuit 72, en adaptant les liaisons entre ce circuit et son environnement à ce cas particulier.

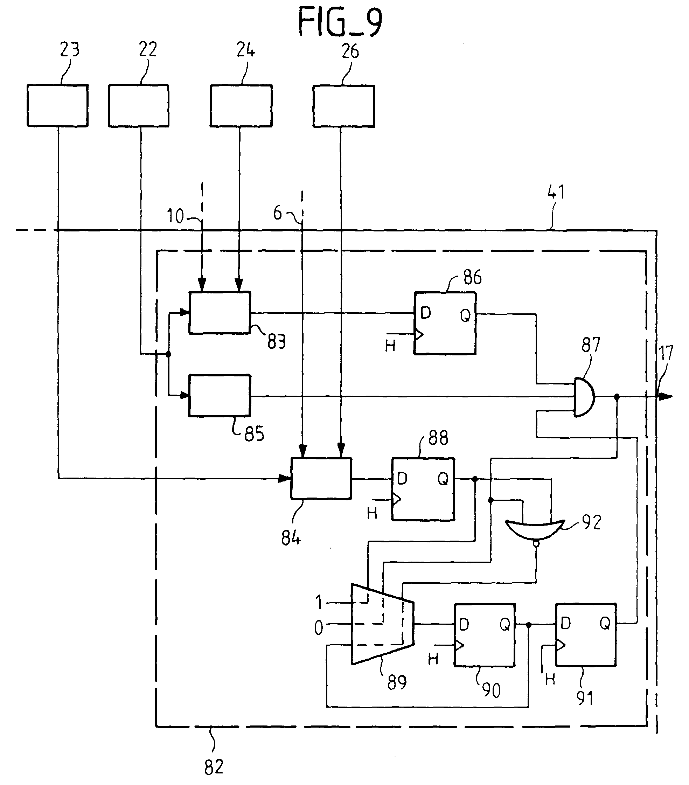

### Point d'arrêt entre les bus d'adresses d'une mémoire de donnée et de la mémoire de programme, l'exécution étant arrêtée si des conditions sont vérifiées sur le bus d'adresse de la mémoire de donnée alors que d'autres conditions ont été vérifiées sur le bus d'adresses de la mémoire de programme lors de l'exécution d'une instruction précédente (figure 9).

L'exemple illustré sur la figure 9 permet de traiter ce cas en ce qui concerne la mémoire de données 7.

Pour contrôler si des conditions du point d'arrêt sont vérifiées pour le bus d'adresses 8, on peut utiliser au choix l'un des circuits de comparaison 24 ou 25. Dans l'exemple décrit, on utilise le circuit de comparaison 24, la valeur présente sur le bus d'adresses 8 étant de fait comparée à la valeur présente sur les sorties du registre 18.

Par ailleurs, on utilise le circuit de comparaison 26 pour contrôler si les conditions concernant le bus d'adresses 4 sont vérifiées, et la valeur présente sur ce bus d'adresses 4 est comparée à la valeur présente sur les sorties du registre 20.

Pour permettre d'arrêter l'exécution d'instructions par l'unité centrale, le circuit de contrôle 41 comprend un circuit 82 pour fournir le signal logique HALT.

Ce circuit 72 comprend :
- un premier circuit de comparaison 83,
- un deuxième circuit de comparaison 84,
- un circuit de sélection 85,
- une première bascule maître-esclave 86 échantillonnant sur front montant du signal d'horloge H,
- un multiplexeur 89 à trois entrées,
- une deuxième bascule maître-esclave 88 échantillonnant sur front montant du signal d'horloge H,
- une troisième bascule maître-esclave 90 échantillonnant sur front montant du signal d'horloge H,
- une quatrième bascule maître-esclave 91 échantillonnant sur front montant du signal d'horloge H,
- une porte logique ET 87 à trois entrées,
- une porte logique NON OU 92 à deux entrées.

Le premier circuit de comparaison 83 est reliée aux lignes 10 véhiculant les signaux de commande d'accès à la mémoire 7, aux sorties du circuit de comparaison 24 et à des sorties du registre 22. Ce circuit 83 a une sortie pour fournir un signal logique tel que ce signal est dans un état donné si les conditions d'arrêt mémorisées dans le registre 22 sont vérifiées sur les lignes 10 et les sorties du circuit de comparaison 24. Par exemple, le signal produit par le circuit de comparaison 83 sera à l'état 1 si les conditions sont vérifiées et à 0 sinon.

La sortie du circuit de comparaison 83 est reliée à l'entrée de la première bascule 86. La sortie de cette bascule 86 est reliée à une première entrée de la porte NON OU 87.

Le deuxième circuit de comparaison 84 est reliée aux lignes 6, aux sorties du circuit de comparaison 26 et à des sorties du registre 23. Ce circuit 84 a une sortie pour fournir un signal logique tel que ce signal est dans un état donné si les conditions d'arrêt mémorisées dans le registre 23 sont vérifiées sur les lignes 6 et les sorties du circuit de comparaison 26. Par exemple, le signal produit par le circuit de comparaison 84 sera à l'état 1 si les conditions sont vérifiées et à 0 sinon.

La sortie du circuit de comparaison 84 est reliée à l'entrée de la deuxième bascule 88.

Le multiplexeur 89 a une première entrée recevant un signal maintenu à l'état logique 1, une deuxième entrée recevant un signal maintenue à l'état logique 0, et sa dernière entrée reliée à la sortie de la troisième bascule 90.

La sortie de la bascule 88 est reliée à une première entrée de commande du multiplexeur 89 de manière à ce que la sortie du multiplexeur 89 soit reliée à sa première entrée quand le signal en sortie de la bascule 88 est à l'état 1. Le multiplexeur a une deuxième entrée de commande reliée à la sortie de la porte ET 87 de manière à ce que sa sortie soit reliée à sa deuxième entrée quand le signal en sortie de la porte 87 est à l'état 1. Enfin, Le multiplexeur a une troisième entrée de commande reliée à la sortie de la porte NON OU 92 de manière à ce que sa sortie soit reliée à sa dernière entrée quand le signal en sortie de la porte 92 est à l'état 1.

La porte NON OU 92 a ses entrées reliées chacune à une autre des entrées de commande du multiplexeur 89.

La sortie du multiplexeur 89 est reliée à l'entrée de la bascule 90. La sortie de cette bascule est connectée l'entrée de la quatrième bascule 91. La sortie de cette bascule 91 est reliée à une deuxième entrée de la porte ET 87.

Une autre entrée de cette porte ET est reliée à une sortie du circuit de sélection 85. Ce circuit 85 joue le même rôle que le circuit de sélection 47 de la figure 4.

La sortie de la porte ET 87 est reliée à la ligne 17 véhiculant le signal HALT.

Ainsi, si lors d'un cycle, toutes les conditions attendues sont vérifiées sur les bus d'adresses 4, la sortie de la bascule 91 fournira un signal d'état logique 1 au début du cycle suivant celui correspondant à l'exécution du mot placé à l'adresse pour laquelle les conditions sont vérifiées.

Si, lors de l'exécution d'une instruction ultérieure ou lors de l'exécution de la même instruction, toutes les conditions sont vérifiées sur le bus de d'adresses 8, le signal HALT passera à 1 au début du cycle suivant.

De même, pour placer les autres points d'arrêt correspondant aux autres cas de consécution, on dupliquera autant de fois que nécessaire le circuit décrit ci-dessus en adaptant les liaisons et les éléments des circuits à chaque cas, en se reportant aux figures 4 à 6 en ce qui concerne la constitution de ces circuits.

On notera que pour traiter le cas d'une consécution portant sur les bus d'adresses des mémoires de données, un seul circuit est suffisant pour traiter les deux cas possibles du fait de la présence des circuits de comparaison 24 et 25. Il suffira par exemple d'utiliser le premier circuit de comparaison pour vérifier les conditions devant apparaître en premier lieu, en adaptant les signaux de commande des multiplexeurs 28 et 29 au cas à traiter.

Bien que non décrit, il est bien entendu évident que le circuit de contrôle comprendra des moyens supplémentaires de sélection pour ne relier qu'une seule sortie de porte NAND à la fois, à la ligne 17, sans quoi se poserait un problème de conflit sur cette ligne.

De même le circuit de contrôle pourra comprendre des moyens tels que ceux décrits dans le circuit 53 afin que l'exécution des instructions ne soit arrêtée qu'à partir du moment où toutes les instructions ayant été décodées au moment de la vérification d'un point d'arrêt ont été exécutées.

Bien qu'on ait décrit l'invention en référence à un exemple de réalisation préféré, on comprendra que cet exemple n'est pas limitatif et que diverses modifications peuvent lui être apportées sans sortir du cadre de l'invention.

## Revendications

1. Circuit intégré (1) comprenant :
- une unité centrale (2),
- une mémoire de programme (3) contenant un programme d'instructions, reliée à l'unité centrale par un bus d'adresses (4), un bus de données (5), et des lignes (6) fournissant des signaux de commande d'accès en lecture et en écriture à cette mémoire, les instructions étant exécutées par l'unité centrale,
- et au moins une mémoire de données (7) reliées à l'unité centrale par un bus d'adresses (8), un bus de données (9), et des lignes (10) fournissant des signaux de commande d'accès en lecture et en écriture à cette mémoire,
caractérisé en ce que le circuit comporte:
- des moyens d'arrêt (16) définissant une combinaison de conditions relatives aux valeurs présentes sur deux des bus de mémoire et aux valeurs de signaux de commande d'accès à au moins une de ces mémoires, et arrêtant l'exécution des instructions si ces conditions sont vérifiées,
- des moyens pour retarder l'arrêt si les conditions qui sont vérifiées portent sur les bus d'adresses,
- et des moyens pour retarder la vérification des conditions, par rapport à l'apparition des valeurs présentes sur les bus, si les conditions portent sur les bus de données.

2. Circuit selon la revendication 1, caractérisé en ce que les moyens d'arrêt arrêtent l'exécution des instructions si les conditions d'une combinaison sont vérifiées lors du traitement d'une même instruction.

3. Circuit selon l'une des revendications 1 à 2, caractérisé en ce que les moyens d'arrêt n'arrêtent l'exécution des instruction que si, au cours du traitement d'une instruction, les conditions d'une combinaison relatives à la valeur présente sur un bus d'une des mémoires et aux valeurs des signaux de commande d'accès à cette mémoire sont vérifiées, les autres conditions de la combinaison, relatives soit à la valeur présente sur l'autre bus de cette mémoire, soit à la valeur présente sur un bus de l'autre mémoire et aux valeurs des signaux de commande d'accès à cette autre mémoire, ayant été vérifiées antérieurement au cours du traitement d'une autre instruction.

4. Circuit selon l'une des revendications 1 à 3, caractérisé en ce qu'il comprend des moyens d'arrêt supplémentaires définissant, pour chaque mémoire, des conditions relatives à la valeur présente sur son bus d'adresses et aux valeurs des signaux de commande d'accès à cette mémoire, et arrêtant l'exécution des instructions si, pour une des mémoires, ces conditions sont vérifiées.

5. Circuit selon l'une des revendication 1 à 4, caractérisé en ce que le circuit comprend des moyens d'arrêt supplémentaires définissant, pour chaque mémoire, des conditions relatives à la valeur présente sur son bus de données et aux valeurs des signaux de commande d'accès à cette mémoire, et arrêtant l'exécution des instructions si, pour une des mémoires, ces conditions sont vérifiées.

6. Circuit selon l'une des revendications 1 à 5, caractérisé en ce que le circuit est agencé de telle manière que si une instruction est décodée alors que des conditions sont vérifiées, les moyens d'arrêt arrêtent l'exécution des instructions après l'exécution de cette instruction.

7. Circuit selon l'une des revendications 1 à 6, caractérisé en ce que le circuit comporte une deuxième mémoire de donnée.

8. Circuit selon l'une des revendications 1 à 7, caractérisé en ce que les conditions sont mémorisées dans des registres configurables à adresse mémoire virtuelle.

9. Circuit selon l'une des revendications 1 à 8, caractérisé en ce qu'il est dédié au traitement de signal.

## Patentansprüche

1. Integrierter Schaltkreis (1), der umfaßt:
- eine Zentraleinheit (2),
- einen Programmspeicher (3), der ein Programm mit Befehlen enthält, der mit der Zentraleinheit über einen Adreßbus (4), einen Datenbus (5) und Leitungen (6), die Steuersignale für den Zugriff beim Lesen und Schreiben auf diesen Speicher übertragen, verbunden ist, wobei die Befehle durch die Zentraleinheit ausgeführt werden,
- und wenigstens einen Datenspeicher (7), der mit der Zentraleinheit über einen Adreßbus (8) einen Datenbus (9) und Leitungen (10), die Steuersignale für den Zugriff beim Lesen und Schreiben auf diesen Speicher übertragen, verbunden ist,
dadurch gekennzeichnet, daß
der Schaltkreis umfaßt:
- Unterbrechungsvorrichtungen (16), die eine Kombination aus Bedingungen definieren, die sich auf Werte auf zwei der Speicherbusse und auf Steuersignalwerte für den Zugriff auf wenigstens einen dieser Speicher beziehen, und die Ausführung der Befehle unterbrechen, wenn diese Bedingungen erfüllt werden,
- Vorrichtungen zum Verzögern der Unterbrechung, wenn die erfüllten Bedingungen sich auf die Adreßbusse beziehen,
- und Vorrichtungen zum Verzögern der Erfüllung der Bedingungen in bezug auf das Auftreten von Daten auf den Bussen, wenn die Bedingungen sich auf die Datenbusse beziehen.

2. Schaltkreis nach Anspruch 1, dadurch gekennzeichnet, daß die Unterbrechungsvorrichtungen die Ausführung der Befehle unterbrechen, wenn die Bedingungen einer Kombination beim Abarbeiten eines gleichen Befehls erfüllt werden.

3. Schaltkreis nach einem der Ansprüche 1 oder 2, dadurch gekennzeichnet, daß die Unterbrechungsvorrichtungen die Ausführung von Befehlen im Verlauf des Abarbeitens eines Befehls nur unterbrechen, wenn die Bedingungen einer Kombination, die mit dem Wert auf einem Bus einer der Speicher und den Werten der Steuersignale für den Zugriff auf diesen Speicher zusammenhängen, erfüllt werden, während die anderen Bedingungen der Kombination, die entweder mit dem Wert auf dem anderen Bus dieses Speichers oder dem Wert auf einem Bus des anderen Speichers und mit den Werten der Steuersignale für den Zugriff auf diesen anderen Speicher zusammenhängen, vorher während des Verlaufs des Abarbeitens eines anderen Befehls erfüllt werden.

4. Schaltkreis nach einem der Ansprüche 1 bis 3, dadurch gekennzeichnet, daß er zusätzliche Unterbrechungsvorrichtungen umfaßt, die für jeden Speicher die Bedingungen, die mit dem Wert auf seinem Adreßbus und mit den Werten der Steuersignale für den Zugriff auf diesen Speicher zusammenhängen, definiert und die Ausführung der Befehle unterbricht, wenn für einen der Speicher diese Bedingungen erfüllt werden.

5. Schaltkreis nach einem der Ansprüche 1 bis 4, dadurch gekennzeichnet, daß der Schaltkreis zusätzliche Unterbrechungsvorrichtungen umfaßt, die für jeden Speicher Bedingungen, die mit dem Wert auf seinem Datenbus und mit den Werten der Steuersignale für den Zugriff auf diesen Speicher zusammenhängen, definiert und die Ausführung der Befehle unterbricht, wenn für einen der Speicher diese Bedingungen erfüllt werden.

6. Schaltkreis nach einem der Ansprüche 1 bis 5, dadurch gekennzeichnet, daß der Schaltkreis derart ausgelegt ist, daß wenn ein Befehl dekodiert wird, während Bedingungen erfüllt werden, die Unterbrechungsvorrichtungen die Ausführung der Befehle nach Ausführung dieses Befehls unterbrechen.

7. Schaltkreis nach einem der Ansprüche 1 bis 6, dadurch gekennzeichnet, daß der Schaltkreis einen zweiten Datenspeicher umfaßt.

8. Schaltkreis nach einem der Ansprüche 1 bis 7, dadurch gekennzeichnet, daß die Bedingungen in konfigurierbaren Registern an einer virtuellen Speicheradresse abgelegt werden.

9. Schaltkreis nach einem der Ansprüche 1 bis 8, dadurch gekennzeichnet, daß er zur Signalverarbeitung verwendet wird.

## Claims

1. Integrated circuit (1) comprising:
- a central unit (2),
- a program memory (3) containing an instruction program, connected to the central unit by an address bus (4), a data bus (5) and lines (6) supplying reading and writing access control signals to this memory, the instructions being executed by the central unit,
- and at least one data memory (7) connected to the central unit by an address bus (8), a data bus (9) and lines (10) supplying reading and writing access control signals to this memory,
characterised in that the circuit has:
- stopping means (16) defining a combination of conditions relating to the values present on two of the memory buses and to the values of signals controlling access to at least one of these memories, and stopping the execution of these instructions if these conditions are verified,
- means of delaying stopping if the conditions which are verified relate to the address buses, and
- means of delaying the verification of the conditions, with respect to the appearance of the values present on the buses, if the conditions relate to the data buses.

2. Circuit according to Claim 1, characterised in that the stopping means stop the execution of the instructions if the conditions of a combination are verified during the processing of one and the same instruction.

3. Circuit according to one of Claims 1 to 2, characterised in that the stopping means stop the execution of the instruction only if, during the processing of an instruction, the conditions of a combination relating to the value present on a bus of one of the memories and to the values of the signals controlling access to this memory are verified, the other conditions of the combination, relating either to the value present on the other bus of this memory or to the value present on a bus of the other memory and to the values of the signals controlling access to this other memory, having been previously verified during the processing of another instruction.

4. Circuit according to one of Claims 1 to 3, characterised in that it comprises additional stopping means defining, for each memory, conditions relating to the value present on its address bus and to the values of the signals controlling access to this memory, and stopping the execution of the instructions if, for one of the memories, these conditions are verified.

5. Circuit according to one Claims 1 to 4, characterised in that the circuit comprises additional stopping means defining, for each memory, conditions relating to the value present on its data bus and to the values of the signals controlling access to this memory, and stopping the execution of the instructions if, for one of the memories, these conditions are verified.

6. Circuit according to one of Claims 1 to 5, characterised in that the circuit is arranged such that, if an instruction is decoded when conditions are verified, the stopping means stop the execution of the instructions after the execution of this instruction.

7. Circuit according to one of Claims 1 to 6, characterised in that the circuit has a second data memory.

8. Circuit according to one of Claims 1 to 7, characterised in that the conditions are stored in configurable virtual memory address registers.

9. Circuit according to one of Claims 1 to 8, characterised in that it is dedicated to signal processing.
